(19) Europäisches Patentamt
European Patent Office
Office européen des brevets

(11) EP 3 585 826 B1

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **18704989.5**

(22) Anmeldetag: **19.02.2018**

(51) Internationale Patentklassifikation (IPC):
***C08G 18/73*** *(2006.01)* ***C08G 18/79*** *(2006.01)*
***C08G 18/02*** *(2006.01)* ***C08G 18/20*** *(2006.01)*

(52) Gemeinsame Patentklassifikation (CPC):
**C08G 18/73; C08G 18/02; C08G 18/20; C08G 18/79**

(86) Internationale Anmeldenummer:
**PCT/EP2018/053986**

(87) Internationale Veröffentlichungsnummer:
**WO 2018/153801 (30.08.2018 Gazette 2018/35)**

(54) **VERFAHREN ZUR MODIFIZIERUNG VON MINDESTENS PENTAMETHYLENDIISOCYANAT UNTER VERWENDUNG VON SPIROCYCLISCHEN AMMONIUMSALZEN ALS KATALYSATOR**

METHOD FOR MODIFYING AT LEAST PENTAMETHYLENDIISOCYANATE USING SPIROCYCLIC AMMONIUM SALTS AS CATALYST

PROCÉDÉ DE MODIFICATION D'AU MOINS PENTAMÉTHYLDIISOCYANATE À L'AIDE DE SELS D'AMMONIUM SPIROCYCLIQUES COMME CATALYSEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2017 EP 17157484**

(43) Veröffentlichungstag der Anmeldung:
**01.01.2020 Patentblatt 2020/01**

(73) Patentinhaber: **Covestro Intellectual Property GmbH & Co. KG**
**51373 Leverkusen (DE)**

(72) Erfinder:
- **HECKING, Andreas**
  **40764 Langenfeld (DE)**
- **RICHTER, Frank**
  **51373 Leverkusen (DE)**
- **EGGERT, Christoph**
  **50733 Köln (DE)**

(74) Vertreter: **Levpat**
**c/o Covestro AG**
**Gebäude 4825**
**51365 Leverkusen (DE)**

(56) Entgegenhaltungen:
**WO-A1-2015/124504 US-A1- 2007 197 759**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 585 826 B1

## Beschreibung

Die Erfindung betrifft ein Verfahren zur Modifizierung von Isocyanaten, bei dem mindestens Pentamethylendiisocyanat in Gegenwart mindestens eines Katalysators oligomerisiert wird, die Verwendung eines derartigen Katalysators, sowie die erhältlichen Oligo- bzw. Polyisocyanate.

Die Oligo- bzw. Polymerisierung von Isocyanaten insbesondere unter Bildung von höhermolekularen Oligomerengemischen mit Uredion- ("Dimer"), Isocyanurat- ("Trimer") und/oder Iminooxadiazindionstrukturen ("asymmetrisches Trimer") im Molekülgerüst, hier zusammenfassend Isocyanatmodifizierung genannt, ist seit langem bekannt. Enthalten die modifizierten Polyisocyanate freie NCO-Gruppen, die ggf. auch mit Blockierungsmitteln vorübergehend desaktiviert worden sein können, sind sie außerordentlich hochwertige Ausgangsstoffe für die Herstellung einer Vielzahl von Polyurethan-Kunststoffen und Beschichtungsmitteln.

Es haben sich eine Reihe technischer Verfahren zur Isocyanatmodifizierung etabliert, wobei man in der Regel das zu modifizierende Isocyanat, meist ein Diisocyanat, durch Zusatz von Katalysatoren umsetzt und diese anschließend, wenn der gewünschte Umsatzgrad des zu modifizierenden Isocyanates erreicht ist, durch geeignete Maßnahmen unwirksam macht (deaktiviert) und das erhaltene Polyisocyanat in der Regel vom nicht umgesetzten Monomer abtrennt. Eine Zusammenstellung dieser Verfahren des Standes der Technik findet sich in H. J. Laas et al., J. Prakt. Chem. 1994, 336, 185 ff.

Als Modifizierungskatalysatoren haben sich Neutralbasen und ionisch aufgebaute Verbindungen bewährt. Letztere können meist in sehr geringer Menge eingesetzt werden und führen äußerst schnell zum gewünschten Ergebnis. Bei den Neutralbasen ist das abhängig vom umzusetzenden Monomer und verwendeter Neutralbase nicht immer so, Struktur-Wirkungs- bzw. -Aktivitätsbeziehungen abzuleiten ist allerdings nahezu unmöglich (vgl. Chem. Eur. J. 2009, 15, 5200 - 5202).

Die Möglichkeit, als Kation zum gegenüber Isocyanaten katalytisch aktiven Anion wie Hydroxid, Alkanoat, Alkoxylat etc. auch Tetraorganylammonium oder -phosphonium zu verwenden, ist allgemein bekannt, wenngleich in der Regel nicht explizit als besonders bevorzugt herausgehoben, vgl.: H. J. Laas et al., J. Prakt. Chem. 1994, 336, 185 ff. Die US 2007/197759 A1 beschreibt ein Verfahren zu Isocyanuratgruppen enthaltenden Polyisocyanaten und deren Verwendung.

Weiterhin ist die Verwendung von Fluoriden und Hydrogenpolyfluoriden, letztere sind stabile Addukte von HF an Fluorid-Ionen enthaltenden Verbindungen, optional auch in Form ihrer Ammonium- oder Phosphoniumsalze, für die Isocyanatmodifizierung unter anderem bekannt aus EP 962 455 A1, EP 962 454 A1, EP 896 009 A1, EP 798 299 A1, EP 447 074 A1, EP 379 914 A1, EP 339 396 A1, EP 315 692 A1, EP 295 926 A1 sowie EP 235 388 A1.

Allerdings weisen die Tetraorganylammonium und -phosphonium (Hydrogenpoly)fluoride des Standes der Technik bei der Durchführung der Modifizierungsreaktion oftmals den Nachteil auf, dass bei ihrer Verwendung die Reaktion mitunter nur durch kontinuierliche Katatalysatordosierung aufrecht zu erhalten ist, d.h. dass die Zersetzung des Katalysators im Isocyanatmilieu im Vergleich zur Modifizierungsreaktion technisch unakzeptabel schnell abläuft.

Hinzu kommt, dass beim Einsatz von Tetraorganylammonium(hydrogen)polyfluoriden mitunter ein untypischer Reaktionsverlauf zu beobachten ist, der zu Produkten mit deutlich niedrigerem Iminooxadiazindiongruppenanteil führt, als bei regulärem Verlauf der Wärmeproduktionsrate (vgl. EP 962 455 A1). Dieser Nachteil wurde nach der Lehre der EP 962 455 A1 durch den Einsatz von Phosphoniumsalzen eliminiert, allerdings weisen letztere - insbesondere bei höheren Reaktionstemperaturen - die weiter oben erwähnte, unakzeptabel hohe Zersetzungstendenz auf, wobei die Zersetzungsprodukte einen nachteiligen Einfluss auf die Prozess- und Produktstabilität haben können.

EP 2 415 795 A1 beschreibt sehr stabile Tetraorganylphosphonium (Hydrogenpoly)fluoride, die diese Nachteile nicht aufweisen, allerdings kommerziell nicht verfügbar und nur aufwendig herzustellen sind.

Die WO 2015/124504 A1 offenbart ein Verfahren zur Modifizierung von monomeren organischen Isocyanaten, bei dem ein spirocyclisches Ammoniumsalz mit einem Kation der Formel I als Katalysator eingesetzt wird,

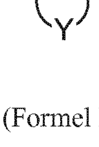

(Formel I),

wobei die N-ständigen Substituenten X und Y für gleiche oder verschiedene, substituierte oder unsubstituierte, ggf. durch Heteroatome (O, N, S) sowie aromatische Ringe unterbrochene C2-C20-Alkylenketten stehen. Nachteilig bei diesem Verfahren ist, dass mit steigendem Umsatz des monomeren organischen Isocyanats der Gehalt an gewünschten

Iminooxadiazindiongruppen stark abnimmt, was zu einem Viskositätsanstieg der Produkte führen kann und somit die Einsatzmöglichkeiten einschränken würde. In der Auflistung der einsetzbaren monomeren organischen Isocyanate ist Pentamethylendiisocyanat (im Folgenden auch PDI genannt) nicht offenbart.

Der Einsatz von PDI zur Herstellung von PDI-Polyisocyanaten ist in der EP 2 684 867 A1 beschrieben, wobei ein Pentamethylendiisocyanat mit einem Gesamtgehalt von 5-400 ppm an Verbindungen der allgemeinen Formel (1) und (2),

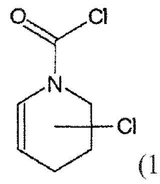 (1) und 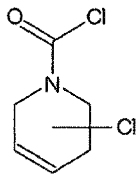 (2),

eingesetzt werden muss, um bei Lagerung farbstabile PDI-Polyisocyanate erhalten zu können. Somit scheint PDI besondere Anforderungen an die Produktqualität zu stellen. Aus technischen Gesichtspunkten ist dies ein großer Nachteil und verringert die Wirtschaftlichkeit deutlich, da PDI mit einem Gesamtgehalt an Verbindungen der allgemeinen Formel (1) und (2) von über 400 ppm bzw. unterhalb von 5 ppm vor allem für farbempfindliche Anwendungen überhaupt nicht verwendet werden kann.

Es war also weiterhin wünschenswert, ein Verfahren zu haben, bei dem einerseits der Anteil an Iminooxadiazindiongruppen auch bei höherem Umsatz nahezu konstant bleibt, so dass eine hohe Raum-Zeit-Ausbeute realisiert werden kann, und sich andererseits farbstabile Polyisocyanate erhalten lassen, wenn das eingesetzte PDI einen Gesamtgehalt an Verbindungen der allgemeinen Formel (1) und (2) auch außerhalb des in der EP 2 684 867 A1 offenbarten Bereichs aufweist.

Daher lag der Erfindung die Aufgabe zugrunde, ein verbessertes Verfahren zur Isocyanatmodifizierung zur Verfügung zu stellen, bei dem bei dem einerseits der Anteil an Iminooxadiazindiongruppen auch bei höherem Umsatz nahezu konstant bleibt, so dass eine hohe Raum-Zeit-Ausbeute realisiert werden kann, und sich andererseits farbstabile Polyisocyanate erhalten lassen, wenn das eingesetzte PDI einen Gesamtgehalt an Verbindungen der allgemeinen Formel (1) und (2) auch außerhalb des in der EP 2 684 867 A1 offenbarten Bereichs aufweist.

Diese Aufgabe wird gelöst durch ein Verfahren zur Modifizierung von Isocyanaten, bei dem mindestens Pentamethylendiisocyanat in Gegenwart mindestens eines Katalysators oligomerisiert wird, wobei der Katalysator mindestens ein spirocylisches Ammoniumsalz mit einem Kation der Formel I als Katalysatoren für die Isocyanatmodifizierung umfasst,

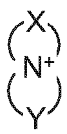

(Formel I),

wobei die N-ständigen Substituenten X und Y für gleiche oder verschiedene, substituierte oder unsubstituierte, ggf. durch Heteroatome (O, N, S) sowie aromatische Ringe unterbrochene $C_2$-$C_{20}$-Alkylenketten stehen.

Überraschenderweise hat sich gezeigt, dass die bekannten Katalysatoren bei der Verwendung von mindestens Pentamethylendiisocyanat als Ausgangsverbindung einen konstant hohen Anteil an Iminooxadiazindiongruppen erzeugen, was beispielsweise Vorteile einer niedrigeren Viskosität bringt. Durch die niedrigere Viskosität lassen sich die erfindungsgemäßen, modifizierten Pentamethylendiisocyanat basierten Polyisocyanate vielfältiger einsetzen.

Zudem konnte gezeigt werden, dass entgegen der Offenbarung der EP 2 684 867 A1 mit dem erfindungsgemäßen Verfahren keine negativen Einflüsse der Verbindungen (1) und (2) in Konzentrationen außerhalb des in der EP 2 684 867 A1 beschriebenen Bereichs auf die Farbstabilität existieren.

Verbindungen des mindestens als Katalysator einzusetzenden Strukturtyps sind in einfacher Weise nach literaturbekannten Methoden (z.B. US 2007/0049750 und darin zit. Literatur) beispielsweise durch Umsetzung von sekundären cyclischen Aminen mit geeignet substituierten Dihalogenalkanen, ggf. in Gegenwart eines Halogenwasserstofffängers, und anschließendem Anionenaustausch zugänglich.

Erfindungsgemäß können X und Y in Formel I unabhängig voneinander für ggf. substituierte Alkylengruppen stehen, wobei $C_4$-$C_6$- Alkylenketten insbesondere in beiden N-zentrierten Ringen bevorzugt sind. Die $C_4$-$C_6$- Alkylen-

ketten sind dabei vorzugsweise linear aufgebaut. Diese sind z.B. in einfacher Weise durch Reaktion von ggf. C-substituierten Pyrrolidinen, Piperidinen und Azepanen (1H-Hexahydroazepinen) mit 1,4-Dihalogenbutan, 1,5-Dihalogenpentan oder 1,6-Dihalogenhexan sowie derer C-substituierter Derivate zugänglich, wobei Halogen für Cl, Br und I, bevorzugt Cl, steht.

Weiterhin sind beispielsweise durch analoge Umsetzung von ggf. C-substituierten Oxazolidinen, Isoxazolidinen, Oxazinanen, Morpholinen und Oxazepanen sowie den Analoga der vorstehend genannten N-O-Heterocyclen, die S statt O enthalten, weiterhin Imidazolidinen, Pyrazolidinen, Piperazinen und strukturell verwandten Verbindungen mit o.g. Dihalogenalkanen auch Vertreter zugänglich, die in einem der Segmente X oder Y der allg. Formel I durch Heteroatome unterbrochene C-Ketten aufweisen. Bei den 2 oder mehr Stickstoffatome enthaltenden Spezies besteht darüber hinaus die Möglichkeit, durch entsprechende Variation der Reaktionsbedingungen auch Salze mit zwei- bzw. mehrfach geladenem Kation zu erzeugen oder durch vorherige geeignete Substitution des bzw. der N-Atome zu einfach positiv geladenen Kationen der Formel I zu gelangen in denen sich ein bzw. mehrere exocyclische(r) Alkylsubstituent(en) an dem bzw. den dreibindigen N-Atom(en) des Ringes X bzw Y befindet bzw. befinden.

Natürlich lässt sich auch durch geeignete Wahl des Alkylierungsmittels eine strukturelle Variation in das Ringsegment X oder Y einbringen, beispielhaft seien Reaktionen von Bis(2-halogenethyl)ethem mit den o.g. sekundären, cyclischen Aminen genannt.

Beispiele solcher Synthesen sind unter anderem in US 2007/0049750 A1 beschrieben, insbesondere hinsichtlich der Abschnitte [0015] bis [0039] dieser Druckschrift.

Als Anionen können bei den Verbindungen der Formel I prinzipiell alle Spezies zum Einsatz kommen, insbesondere solche, die als katalytisch aktiv gegenüber Isocyanaten bekannt sind, wie beispielsweise Hydroxid, Alkanoat, Carboxylat, Heterocyclen mit mindestens einem negativ geladenen Stickstoffatom im Ring wie Azolat, Imidazolat, Triazolat, Tetrazolat, Fluorid, Hydrogendifluorid und höhere Polyfluoride (Addukte von mehr als einem Äquivalent HF an Fluorid-Ionen enthaltenden Verbindungen), wobei die Fluoride, Hydrogendifluoride und höheren Polyfluoride erfindungsgemäß zu Produkten mit hohem Iminooxadiazindiongruppengehalt führen und daher besonders bevorzugt sind.

Die erfindungsgemäßen Katalysatoren können einzelnen oder in beliebigen Mischungen untereinander verwendet werden.

Mit dem erfindungsgemäßen Modifizierverfahren ist eine Vielzahl qualitativ hochwertiger und deshalb für den Polyurethansektor sehr wertvoller Polyisocyanate in einfacher Weise zugänglich. Abhängig vom verwendeten Ausgangs(di)isocyanat und den Reaktionsbedingungen entstehen beim erfindungsgemäßen Verfahren Polyisocyanate vom sog. Isocyanat-Trimertyp (d.h. enthaltend Isocyanurat- und/oder Iminooxadiazindionstrukturen) mit geringem Anteil an Uretdiongruppen ("Isocyanat-Dimere"). Bei steigender Reaktionstemperatur steigt der Anteil letzterer in den Verfahrensprodukten in der Regel an, allerdings ist dieser Effekt weit weniger ausgeprägt, als bei Verwendung von Phosphoniumsalzen mit identischem Anion.

Bei dem erfindungsgemäßen Verfahren kann weiter vorgesehen sein, dass die Oligomerisierung unter Anwesenheit eines Lösungsmittels und/ oder Additivs durchgeführt wird.

Neben dem erfindungswesentlichen Einsatz von Pentamethylendiisocyanat können zur Durchführung des erfindungsgemäßen Verfahrens prinzipiell alle bekannten monomeren Mono-, Di- oder Polyisocyanate des Standes der Technik einzeln oder in beliebigen Mischungen untereinander mitverwendet werden. Beispielhaft seien genannt: Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-methylcyclohexylisocyanat (IMCI), Isophorondiisocyanat (IPDI), 1,3- sowie 1,4-Bis(isocyanatomethyl)benzen (XDI), 1,3-sowie 1,4-Bis(isocyanatometliyl)cyclohexan (H6XDI), Bis(4-isocyanatocyclohexyl)methan ("hydriertes MDI"), Bis(isocyanatomethyl)-bicyclo[2.2.1]heptan (NBDI), 2,4- sowie 2,6-Toluylendiisocyanat (TDI), Bis(4-isocyanatophenyl)methan (4,4'MDI), 4-Isocyanatophenyl-2-isocyanatophenylmethan (2,4'MDI) sowie mehrkernige Produkte, die durch Formaldehyd-Anilin-Polykondensation und anschließende Überführung der resultierenden (Poly)amine in die entsprechenden (Poly)isocyanate zugänglich sind (Polymer-MDI).

Für den Fall der optionalen Mitverwendung sind monomere aliphatische Diisocyanate bevorzugt, d.h. Diisocyanate bei denen beide NCO-Gruppen an ein $sp^3$-hybridisiertes Kohlenstoffatom gebunden sind. Besonders bevorzugt sind Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-l -methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H6XDI).

Falls die in den beiden vorstehenden Absätzen genannten, von PDI verschiedenen, Isocyanate mitverwendet werden sollen, kommen diese vorzugsweise in Mengen von bis zu 80 Gew.-%, bevorzugt bis zu 50 Gew.-%, besonders bevorzugt bis zu 20 Gew.-%, bezogen auf das Gesamtgewicht an eingesetztem PDI und den mitverwendeten Isocyanaten, zum Einsatz.

Daher ist eine bevorzugte Ausführungsform des erfindungsgemäßen Verfahrens, ein Verfahren zur Modifizierung von Isocyanaten, bei dem Pentamethylendiisocyanat und wenigstens eines der vorstehenden genannten Isocyanate

in Gegenwart mindestens eines Katalysators oligomerisiert werden, wobei der Katalysator mindestens ein spirocylisches Ammoniumsalz mit einem Kation der Formel I als Katalysatoren für die Isocyanatmodifizierung umfasst,

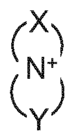

(Formel I),

wobei die N-ständigen Substituenten X und Y für gleiche oder verschiedene, substituierte oder unsubstituierte, ggf. durch Heteroatome (O, N, S) sowie aromatische Ringe unterbrochene $C_2$-$C_{20}$-Alkylenketten stehen und wobei PDI zu mindestens 20 Gew.-%, bevorzugt zu mindestens 50 Gew.- % und besonders bevorzugt zu mindestens 80 Gew.-%, bezogen auf das Gesamtgewicht an eingesetztem PDI und den mitverwendeten Isocyanaten, zum Einsatz kommt.

Besonders bevorzugt wird jedoch nur Pentamethylendiisocyanat als einziges monomeres Isocyanat zur Modifizierung eingesetzt. Hieraus ergibt sich der Vorteil, dass die Verringerung des Anteils an Iminooxadiazindiongruppen bei hohem Umsetzungsgrad noch weiter vermieden wird. Unter der Modifizierung von Pentamethylendiisocyanat wird die Oligo- bzw. Polymerisierung von PDI, insbesondere unter Bildung von höhermolekularen Oligomerengemischen mit Uredion- ("Dimer"), Isocyanurat- ("Trimer") und/oder Iminooxadiazindionstrukturen ("asymmetrisches Trimer") im Molekülgerüst, hier zusammenfassend auch PDI-Modifizierung genannt, angesehen.

Für die vorliegende Erfindung können PDI und die optional mitzuverwendenden, vorgenannten Isocyanate eingesetzt werden, unabhängig davon, nach welchen Verfahren diese hergestellt wurden, also ob sie beispielsweise mit oder ohne Verwendung von Phosgen erzeugt wurden.

Das erfindungsgemäße Verfahren ist hinsichtlich der Qualität des mindestens und bevorzugt ausschließlich, einzusetzenden Pentamethylendiisocyanats weitestgehend unabhängig vom Gehalt an Verbindungen der allgemeinen Formel (1) und (2).

Die Menge des im erfindungsgemäßen Verfahren einzusetzenden Katalysators richtet sich in erster Linie nach der angestrebten Reaktionsgeschwindigkeit und liegt vorzugsweise bei 0,001 bis 5 mol- %, bezogen auf die Summe der Stoffmengen des eingesetzten PDI und der optional mitzuverwendenden, vorgenannten Isocyanate und des Katalysators. Weiter bevorzugt werden 0,002 bis 2 mol- % Katalysator eingesetzt.

Der Katalysator kann im erfindungsgemäßen Verfahren unverdünnt oder in Lösungsmitteln gelöst eingesetzt werden. Als Lösungsmittel kommen dabei alle Verbindungen in Frage, die nicht mit dem Katalysator reagieren und ihn in ausreichendem Maße zu lösen vermögen, z.B. aliphatische oder aromatische Kohlenwasserstoffe, Alkohole, Ketone, Ester sowie Ether. Bevorzugt werden Alkohole verwendet.

Das erfindungsgemäße Verfahren kann im Temperaturbereich von 0 °C bis + 250 °C, bevorzugt 20 bis 180 °C, besonders bevorzugt 40 bis 150 °C erfolgen und bei beliebigen Umsetzungsgraden, bevorzugt nachdem 5 bis 50%, besonders bevorzugt 5 bis 40%, ganz besonders bevorzugt 30 bis 40%, der Gesamtmenge an eingesetzten Isocyanatgruppen des PDI und der optional mitzuverwendenden Isocyanate umgesetzt wurden, abgebrochen werden.

Der Umsetzungsgrad ist als Prozentsatz, der in der Ausgangsmischung ursprünglich vorhandenen Isocyanatgruppen zu verstehen, der während der erfindungsgemäßen Umsetzung verbraucht wird. Der Umsetzungsgrad in Prozent kann nach folgender Formel berechnet werden:

$$\text{Umsetzungsgrad} = (\text{NCO Start} - \text{NCO Ende}) / \text{NCO Start} \times 100$$

Der Gehalt an Isocyanatgruppen kann z.B. titrimetrisch gemäß DIN EN ISO 11 909:2007-05 bestimmt werden.

Zur Katalysatordeaktivierung bieten sich prinzipiell eine ganze Reihe vorbeschriebener Methoden des Standes der Technik an, wie z.B. die Zugabe (unter- oder über-) stöchiometrischer Mengen an starken Säuren oder Säurederivaten (z.B. Benzoylchlorid, saure Ester Phosphor oder Schwefel enthaltender Säuren, diese Säuren selbst etc., nicht jedoch HF), adsorptive Bindung des Katalysators und anschließende Abtrennung durch Filtration und andere dem Fachmann bekannte Methoden.

Im Gegensatz zur Katalyse durch Ammoniumsalze in denen das ladungstragende Stickstoffatom nicht Teil eines spirocylischen Ringsystemes ist, beobachtet man bei Einsatz der erfindungsgemäßen Katalysatoren mit Fluorid- bzw. Oligo/Polyfluoridanionen überraschenderweise keinerlei Anomalien in der Wärmeproduktionsrate und immer einen gleichmäßigen Reaktionsverlauf der zu qualitativ hochwertigen Produkten mit für die jeweiligen Reaktionsbedingungen optimalem Iminooxadiazindiogruppengehalt führt.

Ganz allgemein sind die erfindungsgemäßen Katalysatoren unabhängig vom Anion, das für die katalytische Aktivität und Selektivität verantwortlich ist, im Isocyanatmedium wesentlich stabiler als die literaturbekannten Derivate des Standes der Technik. In Kombination mit dem erfindungswesentlichen Einsatz von PDI lassen sich überraschend konstant hohe Anteile an Iminooxadiazindiongruppen auch bei höheren Umsetzungsgraden erzielen, als wenn nur Isocyanate oligomerisiert werden, die verschieden von PDI sind.

Nach einer besonderen, kontinuierlich arbeitenden Ausführungsform des erfindungsgemäßen Verfahrens kann die Oligomerisierung in einem Rohrreaktor vorgenommen werden.

Die nach dem erfindungsgemäßen Verfahren erhältlichen Produkte bzw. Produktgemische stellen mithin vielseitig verwendbare Ausgangsmaterialien zur Herstellung von, ggf. geschäumte(n), Kunststoffe(n) sowie Lacken, Beschichtungsmitteln, Klebstoffen und Zuschlagstoffen dar. Insbesondere zur Herstellung von, ggf. wasserdipergierbaren Ein- und Zweikomponenten-Polyurethanlacken eignen sie sich, ggf. in NCO-blockierter Form, aufgrund ihrer im Vergleich zu (überwiegend) Isocyanurat-Polyisocyanat basierenden Produkten verringerten Lösungs- sowie Schmelzviskosität bei ansonsten gleich hohem bzw. verbessertem Eigenschaftsprofil. So sind die erfindungsgemäßen Verfahrensprodukte auf PDI-Basis auch in hoher Verdünnung in Lacklösungsmitteln stabiler gegen das Auftreten von Ausflockungen bzw. Trübungen, als entsprechende Produkte des Standes der Technik.

Ein weiterer Gegenstand der vorliegenden Erfindung ist daher ein modifiziertes Isocyanat, herstellbar oder hergestellt nach dem erfindungsgemäßen Verfahren.

Die erfindungsgemäßen Verfahrensprodukte können als solche oder in Verbindung mit anderen Isocyanatderivaten des Standes der Technik, wie z.B. Uretdion-, Biuret-, Allophanat-, Isocyanurat- und/oder Urethan-Gruppen enthaltenden Polyisocyanaten, deren freie NCO-Gruppen ggf. mit Blockierungsmitteln desaktiviert wurden, eingesetzt werden.

Ein weiterer Gegenstand der vorliegenden Erfindung ist gerichtet auf die Verwendung eines spirocylischen Ammoniumsalzes mit einem Kation der Formel I,

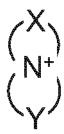

(Formel I),

wobei die N-ständigen Substituenten X und Y für gleiche oder verschiedene, substituierte oder unsubstituierte, ggf. durch Heteroatome (O, N, S) sowie aromatische Ringe unterbrochene $C_2$-$C_{20}$-Alkylenketten stehen, als Katalysatoren für die Oligomerisierung von mindestens Pentamethylendiisocyanat. Auch bei der erfindungsgemäßen Verwendung ist es bevorzugt wenn nur Pentamethylendiisocyanat zur Oligomerisierung eingesetzt wird, da dies ebenfalls mit den vorstehend beschriebenen Vorteilen einhergeht.

Die vorliegende Erfindung wird im Folgenden anhand von Beispielen und Vergleichsbeispielen näher erläutert, ohne sie jedoch auf diese einzuschränken.

## Beispiele

Alle Prozentangaben und ppm-Angaben sind, soweit nicht anders vermerkt, auf das Gewicht bezogen.

Alle Reaktionen wurden unter einer Stickstoffatmosphäre durchgeführt.

Die Bestimmung der NCO-Gehalte erfolgte titrimetrisch nach DIN EN ISO 11909:2007-05.

Die Bestimmung der HC/AC-Gehalte erfolgte nach ISO 15028:2014.

Die dynamischen Viskositäten wurden bei 23 °C mit dem Viskosimeter Physica MCR 51 von Anton Parr nach der DIN EN ISO 3219:1994-10 bestimmt. Durch Messungen bei unterschiedlichen Schergeschwindigkeiten wurde sichergestellt, dass das Fließverhalten der beschriebenen erfindungsgemäßen Polyisocyanatmischungen wie auch das der Vergleichsprodukte dem idealer Newtonscher Flüssigkeiten entspricht. Die Angabe der Schergeschwindigkeit kann deshalb entfallen.

Die Bestimmung der Restmonomergehalte erfolgte gaschromatographisch mit internem Standard nach DIN EN ISO 10283:2007-11.

Mol-% Angaben wurden NMR-spektroskopisch ermittelt und beziehen sich immer, so nicht anders ausgewiesen, auf die Summe der NCO-Folgeprodukte. Die Messungen erfolgten auf dem Gerät DRX 700 der Fa. Bruker an ca. 1 %igen ($^1$H-NMR) bzw. ca. 50 %igen ($^{13}$C-NMR) Proben in trockenem $C_6D_6$ bei 700 MHz ($^1$H-NMR) bzw. 176 MHz ($^{13}$C-NMR) Meßfrequenz. Als Referenz für die ppm-Skale wurde auf das Signal des im Lösungsmittel enthaltenen $C_6D_5H$ referenziert: 7,15 ppm $^1$H-NMR-chem. Verschiebung, 128,02 ppm $^{13}$C-NMR-chem. Verschiebung.. Daten für die chemische Verschiebung der in Frage kommenden Verbindungen wurden der Literatur entnommen (vgl. D. Wendisch, H. Reiff und D. Dieterich, Die Angewandte Makromolekulare Chemie 141, 1986, 173-183 und darin zit. Lit sowie EP-A 896 009).

Die verwendeten Diisocyanate sind Produkte der Covestro Deutschland AG, D-51365 Leverkusen, alle anderen kommerziell zugänglichen Chemikalien wurden von der Fa. Aldrich, D-82018 Taufkirchen, bezogen.

Die Herstellung eines erfindungsgemäß zu verwendenden Katalysators ist in Beispiel 1 beschrieben.

6-Chloro-3,4-dihydropyridin-1(2H)-carbonylchlorid wurde gemäß WO 2012/041789, Beispiel 3.2 auf Seite 83, Zeile 20 bis Seite 84, Zeile 5 erhalten. In Abweichung zur dort beschriebenen Methode wurde das 6-Chloro-3,4-dihydropyridin-1(2H)-carbonylchlorid nach wiederholter Rektifikation im Vakuum in ca. 99%iger (GC, Flächenprozent, nicht normiert) Reinheit als leicht gelbliche Flüssigkeit erhalten (Kp 66°C bei 0,3 mbar, Identität mittels $^1$H- und $^{13}$C-NMR abgesichert).

**Beispiel 1 Katalysatorherstellung: 5-Azonia-spiro[4.5]decanium hydrogendifluorid**

Zu einer auf 100°C vorgewärmten Mischung aus 13,1 g (0,15 mol) Piperidin, und 20 g (0,18 mol) 50%iger wässriger Kalilauge wurden 20 g (0,16 mol) 1,4-Dichlorbutan so zugetropft, dass die Innentemperatur 110°C nicht überschritt. Nach vollständiger Zugabe wurde weitere vier Stunden bei 100°C gerührt und anschließend auf Zimmertemperatur abgekühlt.

Zur erhaltenen Reaktionsmischung wurden unter Rühren bei Zimmertemperatur 360g einer ca. 5%igen methanolischen Kaliumfluoridlösung gegeben. Die Mischung wurde weitere 8 Stunden bei Zimmertemperatur gerührt, filtriert, im Vakuum weitgehend vom Methanol befreit, in ca. 200 g 2-Ethylhexanol aufgenommen, erneut filtriert, mit 3 g wasserfreier Fluorwasserstoffsäure versetzt und weitere 2 Stunden bei Zimmertemperatur gerührt. Anschließend wurde unter reduziertem Druck bei diskontinuierlicher Destillatabnahme so lange zum Rückfluß erhitzt, bis gaschromatografisch reines 2-Ethylhexanol destillierte. Die so erhaltene Katalysatorlösung (ca. 125 g, ca. 20 %ig an 5-Azonia-spiro[4.5]decanium hydrogendifluorid) wurde in den folgenden Versuchen eingesetzt.

**Beispiel 2 (Vergleichsbeispiele)**

In einem doppelwandigen, durch einen externen Kreislauf auf 60°C temperierten Planschliffgefäß mit Rührer, an eine Inertgasanlage (Stickstoff/Vakuum) angeschlossenem Rückflusskühler und Thermometer wurden 1055 g HDI vorgelegt und durch einstündiges Rühren im Vakuum (< 1 mbar) von gelösten Gasen befreit. Nach Belüften mit Stickstoff wurde die in Tabelle 1 angegebene Katalysatormenge portionsweise so dosiert, dass die Exothermie der Reaktion 2-3 °C nicht überschritt. Nachdem der NCO-Gehalt auf

a) ca. 45 +/- 0,5 %

b) ca. 30 +/- 1 %

gefallen war, wurde der Katalysator durch Zugabe einer zum Katalysator äquimolaren Menge an Dodecylbenzolsulfonsäure, 70%ig in 2-PrOH, deaktiviert, weitere 30 min bei Reaktionstemperatur nachgerührt und anschließend aufgearbeitet.

Die Aufarbeitung erfolgte durch Vakuumdestillation in einem Dünnschichtverdampfer, Typ Kurzwegverdampfer (KWV), mit vorgeschaltetem Vorverdampfer (VV) (Destillationsdaten: Druck: 0,1 +/- 0,05 mbar, VV-Temperatur: 120°C, HV-Temp.: 140°C), wobei nicht umgesetztes Monomer als Destillat und das monomerenarme Polyisocyanatharz als Sumpfprodukt separiert wurden (Startdurchlauf). Das Polyisocyanatharz wurde separiert, filtriert und das Destillat in einer zweiten Planschliff-Rührapparatur, die identisch zur ersten aufgebaut ist, gesammelt und mit frisch entgastem HDI auf die Ausgangsmenge (1055 g) aufgefüllt. Anschließend wurde erneut katalysiert und verfahren wie eingangs beschrieben. Diese Verfahrensweise wurde mehrmals wiederholt (Versuche al, a2, a3.. bzw. bl, b2, b3 ... etc.). Die Ergebnisse sind Tabelle 1 zu entnehmen.

Tabelle 1: [1]): Iminooxadiazindiongruppengehalt relativ in Summe Trimere (Iminooxadiazindione sowie Isocyanurate, durch NMR ermittelt)

| Beispiel-Nr. | Katalysatorlsg. [g] | Harzmenge [g] | NCO [%] | Viskosität [mPas/ 23°C] | Farbzahl [Apha] | fr. HDI [%] | Iminooxadiazindione [mol-%][1]) |
|---|---|---|---|---|---|---|---|
| 2a-1 | 0,72 | 169 | 23,7 | 688 | 66 | 0,11 | 54 |

(fortgesetzt)

| Beispiel-Nr. | Katalysatorlsg. [g] | Harzmenge [g] | NCO [%] | Viskosität [mPas/ 23°C] | Farbzahl [Apha] | fr. HDI [%] | Iminooxadiazindione [mol-%][1)] |
|---|---|---|---|---|---|---|---|
| 2a-2 | 0,76 | 195 | 23,6 | 795 | 51 | 0,08 | 51 |
| 2a-3 | 0,70 | 178 | 23,7 | 652 | 40 | 0,07 | 55 |
| 2a-4 | 0,55 | 182 | 23,6 | 741 | 42 | 0,08 | 53 |
| 2a-5 | 0,54 | 177 | 23,9 | 710 | 45 | 0,05 | 54 |
| 2a-6 | 0,55 | 175 | 23,7 | 724 | 35 | 0,05 | 54 |
| 2b-1 | 1,35 | 633 | 19,4 | 13200 | 60 | 0,08 | 32 |
| 2b-2 | 1,23 | 620 | 19,5 | 12900 | 32 | 0,04 | 35 |
| 2b-3 | 1,31 | 640 | 19,3 | 13400 | 47 | 0,05 | 34 |
| 2b-4 | 1,28 | 645 | 19,3 | 13200 | 50 | 0,06 | 35 |
| 2b-5 | 1,30 | 642 | 19,3 | 13250 | 44 | 0,06 | 33 |
| 2b-6 | 1,15 | 633 | 19,5 | 12950 | 46 | 0,04 | 32 |

Bei den erhaltenen Harzen handelte es sich ausnahmslos um farbhelle, klare, viskose Flüssigkeiten ohne wahrnehmbaren Amingeruch. Die mit hohem Umsatz hergestellten Produkte (Beispielreihe 2b) weisen ausnahmslos einen signifikant niedrigeren Gehalt an Iminoxadiazindiongruppen auf, als die mit niedrigerem Umsatz hergestellten Produkte der Beispielreihe 2a.

**Beispiel 3 (erfindungsgemäß)**

In einer Apparatur wie in Beispiel 2 beschrieben wurden 1000 g PDI, dessen Gehalt an 6-Chloro-3,4-dihydropyridin-1(2H)-carbonylchlorid durch Zugabe des eingangs genannten Reinstoffes auf 190 ppm eingestellt worden war, vorgelegt und analog zur dort beschriebenen Verfahrensweise behandelt, mit dem Unterschied, dass die zur Menge an eingesetztem Katalysator molar äquivalente Menge an Deaktivator dosiert wurde, nachdem der NCO-Gehalt auf

a) ca. 50+/- 0,5 %
b) ca. 35 +/- 1 %

gefallen war. Die Aufarbeitung und fortlaufende Recyclierung erfolgte analog der in Beispiel 2 beschriebenen Weise unter Verwendung der vorstehend beschriebenen PDI-Qualität. Die Ergebnisse sind Tabelle 2 zu entnehmen.

Tabelle 2: [1)]: Iminooxadiazindiongruppengehalt relativ in Summe Trimere (Iminooxadiazindione sowie Isocyanurate, durch NMR ermittelt)

| Beispiel-Nr. | Katalysatorlsg. [g] | Harzmenge [g] | NCO [%] | Viskosität [mPas/ 23°C] | Farbzahl [Apha] | fr. PDI [%] | Iminooxadiazindione [mol-%][1)] |
|---|---|---|---|---|---|---|---|
| 3a-1 | 1,20 | 110 | 25,8 | 922 | 54 | 0,16 | 49 |
| 3a-2 | 0,95 | 115 | 25,7 | 890 | 35 | 0,11 | 51 |
| 3a-3 | 0,88 | 117 | 25,7 | 900 | 32 | 0,09 | 52 |
| 3a-4 | 0,85 | 120 | 25,6 | 910 | 30 | 0,07 | 53 |
| 3a-5 | 0,90 | 110 | 25,9 | 900 | 25 | 0,06 | 55 |
| 3a-6 | 0,85 | 115 | 25,7 | 890 | 28 | 0,07 | 55 |
| 3b-1 | 3,02 | 540 | 22,0 | 6900 | 52 | 0,04 | 47 |
| 3b-2 | 2,95 | 550 | 21,9 | 7140 | 42 | 0,03 | 48 |

(fortgesetzt)

| Beispiel-Nr. | Katalysatorlsg. [g] | Harzmenge [g] | NCO [%] | Viskosität [mPas/ 23°C] | Farbzahl [Apha] | fr. PDI [%] | Iminooxadiazindione [mol-%][1)] |
|---|---|---|---|---|---|---|---|
| 3b-3 | 3,10 | 550 | 22,1 | 6950 | 39 | 0,05 | 48 |
| 3b-4 | 3,21 | 535 | 21,9 | 6830 | 40 | 0,04 | 45 |
| 3b-5 | 3,15 | 560 | 22,0 | 6720 | 45 | 0,03 | 49 |
| 3b-6 | 3,10 | 525 | 22,2 | 7130 | 38 | 0,03 | 48 |

Bei den erhaltenen Harzen handelte es sich ausnahmslos um farbhelle, klare, viskose Flüssigkeiten ohne wahrnehmbaren Amingeruch. Die mit hohem Umsatz hergestellten Produkte (Beispielreihe 3b) weisen einen nahezu konstanten Gehalt an Iminoxadiazindiongruppen im Vergleich zu den, mit niedrigerem Umsatz hergestellten Produkten der Beispielreihe 3a auf.

**Beispiel 4 (erfindungsgemäß)**

Es wurde analog Beispielreihe 3b verfahren, mit dem Unterschied, dass die Reaktion bei den Versuchen 4-1 bis 4-4 bei 80 - 85°C und den letzten beiden Versuchen bei 100 - 105°C geführt wurde und 1000 g PDI zum Einsatz kam, dessen Gehalt an 6-Chloro-3,4-dihydropyridin-1(2H)-carbonylchlorid durch Zugabe des eingangs genannten Reinstoffes auf 540 ppm eingestellt worden war. Die Ergebnisse sind Tabelle 3 zu entnehmen.

Tabelle 3: [1)]: Iminooxadiazindiongruppengehalt relativ in Summe Trimere (Iminooxadiazindione sowie Isocyanurate, durch NMR ermittelt)

| Beispiel-Nr. | Katalysatorlsg. [g] | Harzmenge [g] | NCO [%] | Viskosität [mPas/ 23°C] | Farbzahl [Apha] | fr. PDI [%] | Iminooxadiazindione [mol-%][1)] |
|---|---|---|---|---|---|---|---|
| 4-1 | 2,75 | 500 | 21,8 | 5200 | 75 | 0,12 | 38 |
| 4-2 | 1,65 | 550 | 21,3 | 5900 | 45 | 0,14 | 30 |
| 4-3 | 1,63 | 540 | 22,0 | 6200 | 48 | 0,13 | 29 |
| 4-4 | 1,63 | 550 | 21,7 | 7500 | 58 | 0,05 | 31 |
| 4-5 | 1,96 | 500 | 21,0 | 8000 | 72 | 0,06 | 16 |
| 4-6 | 2,00 | 550 | 21,4 | 6560 | 62 | 0,05 | 15 |

Bei den erhaltenen Harzen handelte es sich ausnahmslos um farbhelle, klare, viskose Flüssigkeiten ohne wahrnehmbaren Amingeruch. Die bei höherer Reaktionstemperatur hergestellten Harze (Beispiele 4-5 und 4-6) weisen bei nur geringfügig verschlechterter Farbzahl einen, wie erwartet, geringeren Gehalt an Iminoxadiazindiongruppen auf, als die bei niedrigerer Reaktionstemperatur hergestellten Produkte (4-1 bis 4-4).

**Beispiel 5 (erfindungsgemäß)**

Es wurde analog Beispielreihe 4 verfahren, mit dem Unterschied, dass die Reaktionen bei 70 - 73°C geführt wurden, der Katalysator als ca. 1%ige Lösung in 2-Ethylhexanol zum Einsatz kam, 1000 g PDI, dessen HC/AC-Gehalt unterhalb der Nachweisgrenze (< 5 ppm) lag und in dem gaschromatografisch kein 6-Chloro-3,4-dihydropyridin-1(2H)-carbonylchlorid nachzuweisen war, verwendet wurde und als Deaktivator Toluolsulfonsäure-monohydrat, 50%ig gelöst in iPrOH, zum Einsatz kam.
Die Ergebnisse sind Tabelle 4 zu entnehmen.

Tabelle 4: 1): Iminooxadiazindiongruppengehalt relativ in Summe Trimere (Iminooxadiazindione sowie Isocyanurate, durch NMR ermittelt)

| Beispiel-Nr. | Katalysatorlsg. [g] | Harzmenge [g] | NCO [%] | Viskosität [mPas/ 23 °C] | Farbzahl [Apha] | fr. PDI [%] | Iminooxadiazindione [mol-%]1) |
|---|---|---|---|---|---|---|---|
| 5-1 | 4,78 | 540 | 22,5 | 9340 | 55 | 0,07 | 20 |
| 5-2 | 4,86 | 530 | 21,7 | 9000 | 20 | 0,08 | 14 |
| 5-3 | 4,86 | 520 | 22,3 | 9630 | 54 | 0,05 | 19 |
| 5-4 | 4,39 | 550 | 21,7 | 9800 | 39 | 0,05 | 16 |
| 5-5 | 4,76 | 520 | 22,3 | 9400 | 44 | 0,14 | 16 |
| 5-6 | 4,80 | 520 | 22,0 | 9480 | 38 | 0,11 | 14 |

Bei den erhaltenen Harzen handelte es sich ausnahmslos um farbhelle, klare, viskose Flüssigkeiten ohne wahrnehmbaren Amingeruch.

**Beispiel 6 (erfindungsgemäß)**

In einer Apparatur wie in Beispiel 2 beschrieben wurden eine Mischung aus 200 g PDI, dessen Gehalt an 6-Chloro-3,4-dihydropyridin-1(2H)-carbonylchlorid durch Zugabe des eingangs genannten Reinstoffes auf 190 ppm eingestellt worden war, und 800 g HDI vorgelegt und analog zur im Beispiel 2 beschriebenen Verfahrensweise behandelt, mit dem Unterschied, dass die zur Menge an eingesetztem Katalysator molar äquivalente Menge an Deaktivator dosiert wurde, nachdem der NCO-Gehalt auf

a) ca. 47,0+/-0,5 %
b) ca. 33,0 +/- 1 %

gefallen war.

Die Aufarbeitung und fortlaufende Recyclierung erfolgte analog der in Beispiel 2 beschriebenen Weise unter Verwendung der vorstehend beschriebenen PDI/HDI-Mischung.

Die Ergebnisse sind Tabelle 5 zu entnehmen.

Tabelle 5: 1): Iminooxadiazindiongruppengehalt relativ in Summe Trimere (Iminooxadiazindione sowie Isocyanurate, durch NMR ermittelt)

| Beispiel-Nr. | Katalysatorlsg. [g] | Harzmenge [g] | NCO [%] | Viskosität [mPas/ 23°C] | fr. PDI [%] | fr. HDI [%] | Iminooxadiazindione [mol-%]1) |
|---|---|---|---|---|---|---|---|
| 6a-1 | 1,18 | 160 | 23,8 | 1100 | 0,03 | 0,04 | 43 |
| 6a-2 | 1,29 | 180 | 23,8 | 850 | 0,05 | 0,10 | 52 |
| 6a-3 | 1,49 | 180 | 23,7 | 770 | 0,09 | 0,10 | 52 |
| 6b-1 | 1,92 | 590 | 20,3 | 7700 | 0,05 | 0,06 | 50 |
| 6b-2 | 1,92 | 620 | 19,4 | 11800 | 0,05 | 0,13 | 48 |
| 6b-3 | 2,01 | 610 | 20,2 | 11200 | 0,09 | 0,04 | 47 |

Die mit hohem Umsatz hergestellten Produkte der Beispielreihe 6b stellen farbhelle, klare, viskose Flüssigkeiten mit Farbzahlen um 40 Apha und ohne wahrnehmbaren Amingeruch dar und weisen ebenfalls einen hohen Gehalt an Iminoxadiazindiongruppen im Vergleich zu den mit niedrigerem Umsatz hergestellten Produkten der Beispielreihe 6a auf, was bei der ausschließlichen Verwendung von HDI nicht der Fall ist (Vergleichsbeispiele 2b).

**Messung der Lagerstabilität**

Alle nach erfindungsgemäßem Verfahren hergestellten Produkte der Beispiele 3 bis 6 wurden in verschlossenen Aluminiumgebinden bei 50°C gelagert und in regelmäßigen Abständen über einen Zeitraum von 6 Monaten hinsichtlich ihrer Farbentwicklung überprüft. In keinem Falle konnte eine signifikante Erhöhung der Hazen-Farbzahl beobachtet werden, mitunter trat sogar eine deutliche Aufhellung um bis zu 30 Apha ein.

## Patentansprüche

1. Verfahren zur Modifizierung von Isocyanaten, bei dem mindestens Pentamethylendiisocyanat in Gegenwart mindestens eines Katalysators oligomerisiert wird,
wobei
der Katalysator mindestens ein spirocylisches Ammoniumsalz mit einem Kation der Formel I als Katalysatoren für die Isocyanatmodifizierung umfasst,

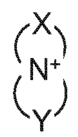

(Formel I),

wobei die N-ständigen Substituenten X und Y für gleiche oder verschiedene, substituierte oder unsubstituierte, ggf. durch Heteroatome (O, N, S) sowie aromatische Ringe unterbrochene $C_2$-$C_{20}$-Alkylenketten stehen.

2. Verfahren nach Anspruch 1, **dadurch gekennzeichnet, dass** X und/ oder Y unabhängig voneinander für ggf. substituierte $C_4$-$C_6$-Alkylenketten stehen und insbesondere linear aufgebaut sind.

3. Verfahren nach Anspruch 1 oder 2, **dadurch gekennzeichnet, dass** das Anion des spirocylischen Ammoniumsalzes ausgewählt ist aus Hydroxid, Alkanoat, Carboxylat, Heterocyclen mit mindestens einem negativ geladenen Stickstoffatom im Ring, insbesondere Azolat, Imidazolat, Triazolat oder Tetrazolat, Fluorid, Hydrogendifluorid oder Mischungen von diesen.

4. Verfahren nach einem der vorstehenden Ansprüche, **dadurch gekennzeichnet, dass** die Oligomerisierung unter Anwesenheit eines Lösungsmittels und/ oder Additivs durchgeführt wird.

5. Verfahren nach einem der vorstehenden Ansprüche, **dadurch gekennzeichnet, dass** neben Pentamethylendiisocyanat noch mindestens ein monomeres organisches Isocyanat eingesetzt wird, das ausgewählt ist aus aliphatischen Diisocyanaten, insbesondere aus Hexamethylendiisocyanat (HDI), 2-Methylpentan-l,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-l-methylcyclohexylisocyanat (IMCI), Isophorondiisocyanat (IPDI), 1,3-sowie 1,4-Bis(isocyanatomethyl)benzen (XDI), 1,3- sowie 1,4-Bis(isocyanatomethyl)cyclohexan (H6XDI) oder Mischungen von diesen.

6. Verfahren nach einem Ansprüche 1 bis 4, **dadurch gekennzeichnet, dass** als Isocyanat zur Oligomerisierung nur Pentamethylendiisocyanat eingesetzt wird.

7. Verfahren nach einem der vorstehenden Ansprüche, **dadurch gekennzeichnet, dass** der Katalysator der Formel I in einer Menge von 0,001 bis 5 mol-%, bezogen auf die Summe der Stoffmengen des eingesetzten PDI und der optional mitzuverwendenden, vorgenannten Isocyanate und des Katalysators eingesetzt wird, bevorzugt 0,002 bis 2 mol-% Katalysator.

8. Verfahren nach einem der vorstehenden Ansprüche, **dadurch gekennzeichnet, dass** das Verfahren im Temperaturbereich von 0 °C bis + 250 °C durchgeführt wird, bevorzugt 20 bis 180 °C, besonders bevorzugt 40 bis 150 °C.

9. Verfahren nach einem der vorstehenden Ansprüche, **dadurch gekennzeichnet, dass** die Oligomerisierung abgebrochen wird, nachdem 5 bis 50%, bevorzugt 5 bis 40%, besonders bevorzugt 30 bis 40%, der Gesamtmenge an eingesetzten Isocycanatgruppen des PDI und der optional mitzuverwendenden Isocyanate umgesetzt sind.

**10.** Verfahren nach Anspruch 9, **dadurch gekennzeichnet, dass** die Oligomerisierung abgebrochen wird, indem der Katalysator desaktiviert wird, insbesondere durch Zugabe einer Säure oder eines Säurederivates wie Benzoylchlorid, eines sauren Esters Phosphor oder Schwefel enthaltender Säuren, diese Säuren selbst, adsorptive Bindung des Katalysators und anschließende Abtrennung durch Filtration oder Kombinationen hiervon.

**11.** Verfahren nach Anspruch 9 oder 10, **dadurch gekennzeichnet, dass** nicht umgesetztes monomeres organisches Isocyanat aus der Reaktionsmischung abgetrennt wird.

**12.** Modifiziertes Isocyanat, herstellbar oder hergestellt gemäß einem Verfahren nach einem der Ansprüche 1 bis 11.

**13.** Verwendung eines spirocylischen Ammoniumsalzes mit einem Kation der Formel I,

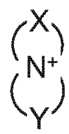

(Formel I),

wobei die N-ständigen Substituenten X und Y für gleiche oder verschiedene, substituierte oder unsubstituierte, ggf. durch Heteroatome (O,N, S) sowie aromatische Ringe unterbrochene $C_2$-$C_{20}$-Alkylenketten stehen, als Katalysatoren für die Oligomerisierung von mindestens Pentamethylendiisocyanat.

**14.** Verwendung nach Anspruch 13, **dadurch gekennzeichnet, dass** als Isocyanat zur Oligomerisierung nur Pentamethylendiisocyanat eingesetzt wird.

## Claims

**1.** Method for modifying isocyanates, in which method at least pentamethylene diisocyanate is oligomerized in the presence of at least one catalyst,
where
the catalyst comprises at least one spirocyclic ammonium salt having a cation of the formula I as catalysts for the isocyanate modification,

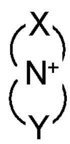

(formula I)

where the nitrogen substituents X and Y are identical or different, substituted or unsubstituted $C_2$-$C_{20}$-alkylene chains optionally interrupted by heteroatoms (O, N, S) and aromatic rings.

**2.** Method according to Claim 1, **characterized in that** X and/or Y are each independently optionally substituted $C_4$-$C_6$-alkylene chains and are especially of linear structure.

**3.** Method according to Claim 1 or 2, **characterized in that** the anion of the spirocyclic ammonium salt is selected from hydroxide, alkanoate, carboxylate, heterocycles having at least one negatively charged nitrogen atom in the ring, especially azolate, imidazolate, triazolate or tetrazolate, fluoride, hydrogendifluoride and mixtures of these.

**4.** Method according to any of the preceding claims, **characterized in that** the oligomerization is conducted in the presence of a solvent and/or additive.

**5.** Method according to any of the preceding claims, **characterized in that**, in addition to pentamethylene diisocyanate, at least one monomeric organic isocyanate is also used selected from aliphatic diisocyanates, especially from hexamethylene diisocyanate (HDI), 2-methylpentane 1,5-diisocyanate, 2,4,4-trimethylhexane 1,6-diisocyanate, 2,2,4-trimethylhexane 1,6-diisocyanate, 4-isocyanatomethyloctane 1,8-diisocyanate, 3(4)-isocyanatomethyl-1-methylcyclohexyl isocyanate (IMCI), isophorone diisocyanate (IPDI), 1,3- and 1,4-bis(isocyanatomethyl)benzene (XDI), 1,3- and 1,4-bis(isocyanatomethyl)cyclohexane (H6XDI) and mixtures of these.

**6.** Method according to any of Claims 1 to 4, **characterized in that** only pentamethylene diisocyanate is used as isocyanate for the oligomerization.

**7.** Method according to any of the preceding claims, **characterized in that** the catalyst of the formula I is used in an amount of 0.001 to 5 mol%, based on the sum total of the molar amounts of the PDI used and of the aforementioned isocyanates to be optionally concomitantly used, and of the catalyst, preferably 0.002 to 2 mol% of catalyst.

**8.** Method according to any of the preceding claims, **characterized in that** the method is conducted in the temperature range from 0°C to +250°C, preferably 20 to 180°C, particularly preferably 40 to 150°C.

**9.** Method according to any of the preceding claims, **characterized in that** the oligomerization is stopped after 5 to 50%, preferably 5 to 40%, particularly preferably 30 to 40%, of the total amount of isocyanate groups of the PDI used and of the isocyanates to be optionally concomitantly used have reacted.

**10.** Method according to Claim 9, **characterized in that** the oligomerization is stopped by deactivating the catalyst, especially by addition of an acid or an acid derivative such as benzoyl chloride, an acidic ester of phosphorus- or sulfur-containing acids, these acids themselves, adsorptive binding of the catalyst and subsequent removal by filtration or combinations thereof.

**11.** Method according to Claim 9 or 10, **characterized in that** unreacted monomeric organic isocyanate is separated from the reaction mixture.

**12.** Modified isocyanate preparable or prepared by a method according to any of Claims 1 to 11.

**13.** Use of a spirocyclic ammonium salt having a cation of the formula I,

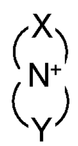

(formula I)

where the nitrogen substituents X and Y are identical or different, substituted or unsubstituted $C_2$-$C_{20}$-alkylene chains optionally interrupted by heteroatoms (O, N, S) and aromatic rings, as catalysts for the oligomerization of at least pentamethylene diisocyanate.

**14.** Use according to Claim 13, **characterized in that** only pentamethylene diisocyanate is used as isocyanate for the oligomerization.

**Revendications**

**1.** Procédé pour la modification d'isocyanates, dans lequel on oligomérise au moins du diisocyanate de pentaméthylène en présence d'au moins un catalyseur,
le catalyseur comprenant au moins un sel d'ammonium spirocyclique présentant un cation de formule I comme catalyseurs pour la modification d'isocyanate,

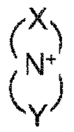

(formule I),

les substituants X et Y en position N représentant des chaînes $C_2$-$C_{20}$-alkylène identiques ou différentes, substituées ou non substituées, le cas échéant interrompues par des hétéroatomes (O, N, S) ainsi que par des cycles aromatiques.

**2.** Procédé selon la revendication 1, **caractérisé en ce que** X et/ou Y représentent, indépendamment l'un de l'autre, des chaînes $C_4$-$C_6$-alkylène le cas échéant substituées et sont en particulier linéaires.

**3.** Procédé selon la revendication 1 ou 2, **caractérisé en ce que** l'anion du sel d'ammonium spirocyclique est choisi parmi hydroxyde, alcanoate, carboxylate, hétérocycles présentant au moins un atome d'azote chargé négativement dans le cycle, en particulier azolate, imidazolate, triazolate ou tétrazolate, fluorure, hydrogénodifluorure ou leurs mélanges.

**4.** Procédé selon l'une quelconque des revendications précédentes, **caractérisé en ce que** l'oligomérisation est réalisée en présence d'un solvant et/ou d'additifs.

**5.** Procédé selon l'une quelconque des revendications précédentes, **caractérisé en ce qu'**on utilise, outre le diisocyanate de pentaméthylène, encore au moins un isocyanate organique monomère, qui est choisi parmi les diisocyanates aliphatiques, en particulier parmi le diisocyanate d'hexaméthylène (HDI), le 1,5-diisocyanate de 2-méthylpentane, le 2,4,4-triméthyl-1,6-hexanediisocyanate, le 2,2,4-triméthyl-1,6-hexanediisocyanate, le 4-isocyanatométhyl-1,8-octanediisocyanate, le 3(4)-isocyanatométhyl-1-méthylcyclohexylisocyanate (IMCI), le diisocyanate d'isophorone (IPDI), le 1,3-bis(isocyanatométhyl)benzène ainsi que le 1,4-bis(isocyanatométhyl)benzène (XDI), le 1,3-bis(isocyanatométhyl)cyclohexane et le 1,4-bis(isocyanatométhyl)cyclohexane (H6XDI) ou leurs mélanges.

**6.** Procédé selon l'une quelconque des revendications 1 à 4, **caractérisé en ce qu'**on n'utilise que du diisocyanate de pentaméthylène comme isocyanate pour l'oligomérisation.

**7.** Procédé selon l'une quelconque des revendications précédentes, **caractérisé en ce que** le catalyseur de formule I est utilisé en une quantité de 0,001 à 5% en mole, par rapport à la somme des quantités du PDI utilisé et des isocyanates susmentionnés éventuellement à utiliser conjointement et du catalyseur, de préférence de 0,002 à 2% en mole de catalyseur.

**8.** Procédé selon l'une quelconque des revendications précédentes, **caractérisé en ce que** le procédé est réalisé dans la plage de température de 0 à +250°C, de préférence de 20 à 180°C, de manière particulièrement préférée de 40 à 150°C.

**9.** Procédé selon l'une quelconque des revendications précédentes, **caractérisé en ce que** l'oligomérisation est interrompue après que 5 à 50% en poids, de préférence 5 à 40% en poids, de manière particulièrement préférée 30 à 40%, de la quantité totale de groupes isocyanate utilisés du PDI et des isocyanates éventuellement à utiliser conjointement sont transformés.

**10.** Procédé selon la revendication 9, **caractérisé en ce que** l'oligomérisation est interrompue **en ce que** le catalyseur est désactivé, en particulier par addition d'un acide ou d'un dérivé d'acide tel qu'un chlorure de benzoyle, d'un ester acide d'acides contenant du phosphore ou du soufre, de ces acides eux-mêmes, par liaison par adsorption du catalyseur et séparation consécutive par filtration ou par des combinaisons correspondantes.

**11.** Procédé selon la revendication 9 ou 10, **caractérisé en ce que** de l'isocyanate organique monomère non transformé est séparé du mélange réactionnel.

**12.** Isocyanate modifié, pouvant être préparé ou préparé selon un procédé selon l'une quelconque des revendications 1 à 11.

**13.** Utilisation d'un sel d'ammonium spirocyclique présentant un cation de formule I,

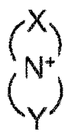

(formule I),

les substituants X et Y en position N représentant des chaînes $C_2$-$C_{20}$-alkylène identiques ou différentes, substituées ou non substituées, le cas échéant interrompues par des hétéroatomes (O, N, S) ainsi que par des cycles aromatiques, comme catalyseurs pour l'oligomérisation au moins de diisocyanate de pentaméthylène.

**14.** Utilisation selon la revendication 13, **caractérisée en ce qu'**on n'utilise que du diisocyanate de pentaméthylène comme isocyanate pour l'oligomérisation.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2007197759 A1
- EP 962455 A1
- EP 962454 A1
- EP 896009 A1
- EP 798299 A1
- EP 447074 A1
- EP 379914 A1
- EP 339396 A1
- EP 315692 A1
- EP 295926 A1
- EP 235388 A1
- EP 2415795 A1
- WO 2015124504 A1
- EP 2684867 A1
- US 20070049750 A
- US 20070049750 A1
- EP 896009 A
- WO 2012041789 A


### In der Beschreibung aufgeführte Nicht-Patentliteratur


- **H. J. LAAS et al.** *J. Prakt. Chem.,* 1994, vol. 336, 185
- *Chem. Eur. J.,* 2009, vol. 15, 5200-5202
- **D. WENDISCH ; H. REIFF ; D. DIETERICH.** *Die Angewandte Makromolekulare Chemie,* 1986, vol. 141, 173-183